# EUROPÄISCHE PATENTANMELDUNG

(11) **EP 2 757 059 A1**
(43) Veröffentlichungstag der Anmeldung: **23.07.2014**
(21) Anmeldenummer: 14151037.0
(22) Anmeldetag: 14.01.2014
(51) Int. Cl.: B65G 17/18, B65G 1/127, B65G 17/12

(54) **Lagersystem mit einem Umlaufmagazin**

(30) Priorität: 21.01.2013 DE 102013000958
(71) Anmelder: Rehm, Udo, 72072 Tübingen (DE)
(72) Erfinder: Rehm, Udo, 72072 Tübingen (DE)
(74) Vertreter: Ott, Elmar

(57) **Zusammenfassung**

Die Erfindung betrifft ein Lagersystem mit einem Umlaufmagazin (1), bei dem mehrere Lagereinheiten (4) in Reihe an wenigstens einer Transportkette (8) oder einem anderen flexiblen Transportstrang, vorzugsweise jeweils schwenkbar um eine horizontale Achse, gelagert sind, wobei die Lagereinheiten (4) jeweils mittels einer Verstelleinrichtung (19) am Transportstrang seitenverschiebbar angebracht sind und eine Führungseinrichtung die seitliche Verschiebung der Lagereinheiten (4) gegenüber dem Transportstrang bestimmt. Die Lagereinheiten sind als quaderförmige Lagerboxen ausgebildet.

## Beschreibung

Die Erfindung betrifft ein Lagersystem mit einem Umlaufmagazin, bei dem mehrere Lagereinheiten in einer Reihe an wenigstens einer Transportkette oder einem anderen flexiblen Transportstrang gelagert sind.

Aus der österreichischen Patentschrift AT 241350 ist ein Lagersystem mit einem Umlaufregal bekannt, bei dem an einem endlosen Transportstrang mehrere in Reihe angeordnete Aufnahmefächer angebracht sind. Die Position der Aufnahmefächer kann entlang der Transportrichtung des Transportstrangs verändert werden, so dass jedes der Aufnahmefächer in eine zugängliche Position gebracht werden kann, um beispielsweise einen Gegenstand aus einem Aufnahmefach entnehmen zu können. Bei dieser bekannten Ausführung eines Lagersystems sind die Transportstränge horizontal ausgerichtet, so dass auch die Bewegungsrichtung der Aufnahmefächer in einer horizontalen Ebene verläuft.

Aus der WO 94/02889 ist ein Lagersystem mit einer Mehrzahl von Lagereinheiten bekannt, die an einem Transportstrang angebracht sind, der als geschlossener Strang um eine obere und eine untere Umlenkrolle geführt ist. Die Lagereinheiten lassen sich somit mittels des Transportstrangs vertikal aufsteigend und absteigend bewegen, wobei außerdem im Bereich der Umlenkrollen bei gleichbleibender Bewegungsrichtung des Transportstrangs eine Richtungsumlenkung der Lagereinheiten erfolgt.

Aus der DE 1 194 324 B ist weiterhin eine Fördereinrichtung bekannt, die im Wesentlichen aus zwei vertikal umlaufenden Ketten mit einer Vielzahl von zwischen diesen angebrachten Warenträgern besteht.

Aus der GB 358 243 A ist ein Lagersystem für Kraftfahrzeuge bekannt, bei dem oberhalb einer Plattform an einem Lagerzapfen jeweils eine Plattform an einer Transportkette gelagert ist. Die einzelnen Plattformen sind im Abstand übereinander angeordnet und befinden sich in einem im Wesentlichen geschlossenen Parkhaus.

Derartige Lagersysteme mit einem mehrere Lagereinheiten umfassenden Umlaufmagazin erlauben eine platzsparende Unterbringung von Gegenständen, wobei im zurückgesetzten Bereich hinter einer vorderen Zugangsebene ein nicht direkt zugänglicher Lagerraum genutzt werden kann. Die im nicht direkt zugänglichen Lagerraum befindlichen Lagerelemente können mit dem Transportstrang über Umlenkräder in den zugänglichen Bereich transportiert werden. Um eine möglichst gute Raumausnutzung in der Tiefe des gesamten Lagerraums zu erhalten, sollten die Lagerelemente sowohl in vertikaler als auch in horizontaler Richtung einen möglichst geringen Abstand zueinander haben.

Der Erfindung liegt die Aufgabe zugrunde, ein Lagersystem mit einem Umlaufmagazin zu schaffen, bei dem die einzelnen Lagereinheiten des Lagermagazins möglichst raumsparend und mit möglichst geringem Abstand übereinander im Lagersystem angeordnet werden können.

Die Lösung dieser Aufgabe erhält man mit den Merkmalen des Patentanspruchs 1. Besonders vorteilhafte Weiterbildungen sind in den Unteransprüchen offenbart.

Das Lagersystem gemäß dem kennzeichnenden Teil des Patentanspruchs 1 sieht vor, dass die Lagereinheiten jeweils mittels einer Verstelleinrichtung am Transportstrang seitenverschiebbar angebracht sind, und dass eine Führungseinrichtung die seitliche Verschiebung der Lagereinheiten gegenüber dem Transportstrang bestimmt. Durch die seitliche Verschiebung der Lagereinheiten gegenüber dem Transportstrang können diese in aufsteigender und absteigender Richtung im Umlaufmagazin so positioniert werden, dass geringstmögliche Zwischenräume in vertikaler und horizontaler Richtung zwischen den Lagereinheiten erreicht werden. Die seitliche Verschiebbarkeit führt am vertikal verlaufenden Transportstrang zu einer horizontalen Verschiebbarkeit, während im Bereich der Umlenkräder, die zur Umlenkung des Transportstranges und der Lagereinheiten vorgesehen sind, eine in Bezug auf die Transporträder radiale Verschiebbarkeit erreicht wird. Am höchsten und am untersten Umlenkpunkt ergibt sich dadurch eine vertikale Verschiebbarkeit an dem am jeweiligen Umlenkungsrad anliegenden Transportstrang. Dadurch wird es möglich, dass die dicht übereinander am Transportstrang angeordneten Lagereinheiten, die beispielsweise Lagerboxen sein können, ohne sich zu behindern umgelenkt werden können.

Die abstandslos übereinander angeordneten Lagereinheiten in Form von Lagerboxen ergeben den Vorteil, dass die dahinter befindlichen vertikalen Transportstränge mit ihren Lagereinheiten von den zugänglichen Seiten - Frontseite und/oder Rückseite - nicht sichtbar sind. Somit entsteht an den zugänglichen Seiten ein zum Befüllen und Entnehmen zugängliches Lagersystem, bei dem Benutzer nicht in Bereiche eingreifen können, die eine Verletzungsgefahr darstellen. Dieses "geschlossene" Lagersystem kann somit auch im Kundenbereich Verwendung finden.

Ein weiterer Vorteil besteht darin, dass die unzugänglichen Bereiche vor einer unberechtigten Entnahme von in den Lagereinheiten einliegenden Produkten geschützt sind.

Das Lagersystem kann auch so eingesetzt werden, dass in einem vorderen Bereich (Frontseite) ein zugänglicher Kundenbereich realisiert ist, während an der Rückseite die in den Lagereinheiten einliegenden Produkte nachgefüllt oder ausgetauscht werden können.

Die Verstelleinrichtungen, die den Lagereinheiten zugeordnet sind, sind vorzugsweise als Lagerblock mit einer quer zur Ausrichtung des Transportstrangs verschiebbar gelagerten Verstellschiene ausgebildet. An der Verstellschiene kann dann die jeweilige Lagereinheit mittels eines Halteelements befestigt sein.

Vorzugsweise dient dabei das Halteelement sowohl als Schwenklager als auch als Führungselement, welches Teil der Führungseinrichtung ist. Dadurch ergibt sich ein sehr einfacher Aufbau für die Verstelleinrichtung, die damit auch sehr raumsparend ausführbar ist.

Die Führungseinrichtung kann in einfacher Weise Führungsschlitze, Führungsnuten oder Führungsschienen besitzen, an denen Führungselemente der Verstelleinrichtungen angreifen und geführt werden. Dabei ist es besonders vorteilhaft, wenn an der Verstelleinrichtung ein zapfenförmiges Halteelement für die Lagereinheiten absteht, welches die Funktion eines Führungselements im Zusammenhang mit einer Führungsnut oder einem Führungsschlitz hat. Die Führungsnut bzw. der Führungsschlitz gibt dabei exakt die Abstandsposition zum Transportstrang für das jeweilige Halteelement und damit für die am Halteelement befestigte Lagereinheit vor.

Damit in den Lagereinheiten einliegende Gegenstände auch während des Umlenkens einer Lagereinheit in dieser immer die gleiche Lage behalten können, sind die Lagereinheiten nicht starr mit dem Transportstrang verbunden, sondern schwenkbar an diesem gelagert. Damit kann erreicht werden, dass die Lagereinheiten völlig unabhängig von ihrer Position im Umlaufmagazin immer mit ihrem Boden nach unten ausgerichtet bleiben. Die Lagereinheiten werden somit auch durch den Umlenkvorgang nicht "auf den Kopf gestellt".

Die Lagereinheiten können als Lagerboxen für die unterschiedlichsten Anwendungen ausgebildet sein. Beispielsweise können derartige Lagerboxen zur Aufnahme von Kleinteilen, Montageteilen oder Schüttgut Verwendung finden. Es besteht aber auch die Möglichkeit, ein derartiges Lagersystem so auszubilden, dass jede Lagereinheit z. B. einen Abstellplatz für ein Kraftfahrzeug, einen Container oder für Sperrgut darstellt.

Vorzugsweise sind die Lagereinheiten an gegenüberliegenden Stirnseiten mit jeweils einem zugehörigen Transportstang schwenkbar und seitenverschiebbar verbunden. Eine bevorzugte Ausführung sieht vor, dass eine Führungsbahn in unterschiedlichen Abständen zu einer Kettenbahn verläuft, wobei die Führungsbahn durch einen Führungsschlitz oder eine sonstige Führungseinrichtung vorgegeben ist und die Kettenbahn dem Verlauf einem als Transportkette ausgebildeten Transportstrang entspricht, die in mehreren hintereinander verlaufenden Schleifen um Umlenkräder als Endlosstrang verläuft.

Dabei kann weiterhin vorgesehen sein, dass das Umlaufmagazin an einer Frontseite und/oder einer Rückseite einen freien Zugang zu den Lagereinheiten hat, und dass nicht zugängliche Lagereinheiten in mehreren senkrecht verlaufenden Lagerebenen mehrere im Wesentlichen vertikal verlaufende Reihen von Lagereinheiten bilden, die sich in einem unzugänglichen Bereich befinden, und dass die im unzugänglichen Bereich befindlichen Lagereinheiten durch eine Längsbewegung des Transportstrangs in den an der Frontseite und/oder Rückseite zugänglichen Bereich transportierbar sind.

Die Erfindung wird nachfolgend anhand eines in der Zeichnung dargestellten Ausführungsbeispiels näher erläutert.

Es zeigen:
Fig. 1 ein Lagersystem mit einem Umlaufmagazin mit mehrfacher Umlenkung,
Fig. 2 eine schematische Darstellung der Seitenansicht des Umlaufmagazins von Figur 1,
Fig. 3 eine Detailansicht im Bereich einer an einer Transportkette angebrachten Verstelleinrichtung,
Fig. 4 einen Lagerblock und eine Verstellschiene mit Halteelement der in Figur 3 dargestellten Verstelleinrichtung,
Fig. 5 eine Detailansicht von der Rückseite der an einer Transportkette angebrachten Verstelleinrichtung,
Fig. 6 einen Ausschnitt aus der seitlichen Ansicht des Umlaufmagazins mit unterschiedlich gegenüber der Transportkette seitlich verschobenen Lagereinheiten.

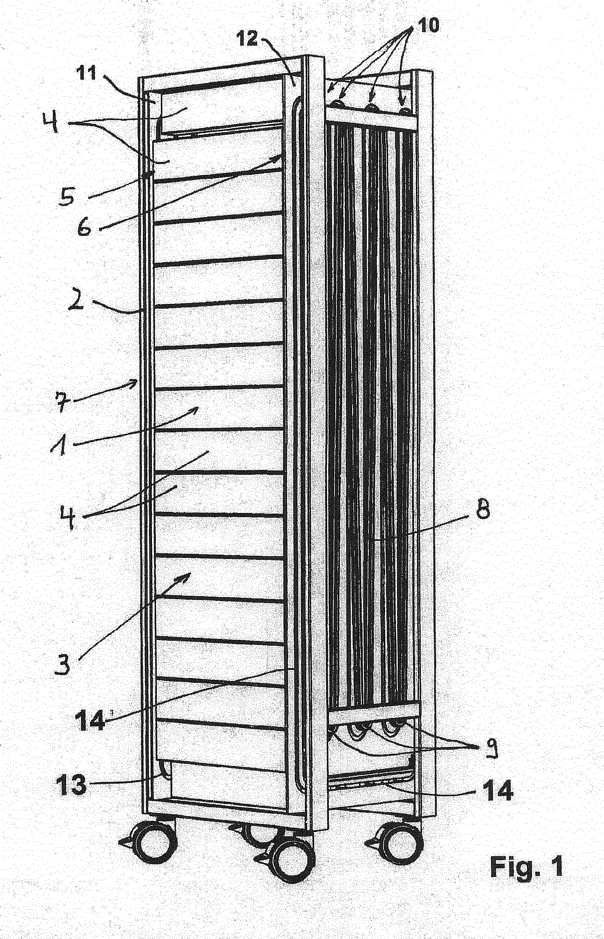

Figur 1 zeigt ein Lagersystem, bei dem ein Umlaufmagazin 1 in einem fahrbaren Gestellrahmen 2 angeordnet ist. An der Frontseite 3 sind mehrere dicht übereinander angeordnete Lagereinheiten 4 ersichtlich, die als quaderförmige Lagerboxen ausgebildet sind. Die Lagereinheiten 4 sind von der Frontseite 3 aus zugänglich, so dass in ihnen einliegendes Lagergut entnommen werden kann. Die Lagereinheiten 4 sind an ihren gegenüberliegenden Stirnseiten 5, 6, die hier nicht sichtbar sind, schwenkbeweglich an jeweils an einem Transportstrang 7, 8 befestigt. In Figur 1 ist nur der rechtsseitige Transportstrang 8 ersichtlich, der mittels Umlenkrädern 9, 10 mehrfach umgelenkt wird.

In Fig. 1 ist außerdem ersichtlich, dass die Lagereinheiten 4 zwischen seitlichen Führungsplatten 11, 12 angeordnet sind. Die Führungsplatten 11, 12 besitzen insbesondere jeweils einen Führungsschlitz 13, 14, der die seitliche Verschiebung der Lagereinheiten bzgl. der Position der Transportkette 7, 8 bestimmt.

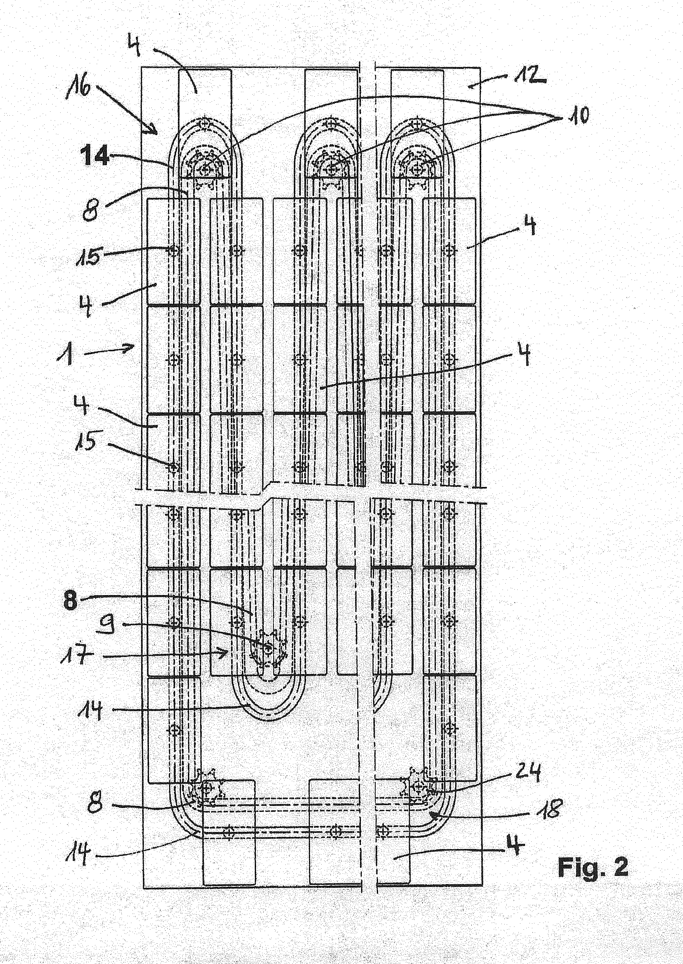

In der Darstellung von Fig. 2 sind insbesondere der Verlauf der als Transportstrang dienenden Transportkette 8 und der Verlauf des Führungsschlitzes 14 ersichtlich. Durch den Führungsschlitz 14 greifen bolzenförmige Halteelemente 15, an denen die Lagereinheiten 4 schwenkbeweglich gelagert sind.

In der dargestellten Seitenansicht ist ersichtlich, dass in dem Lagersystem bzw. im Umlaufmagazin 1 der Innenraum mit übereinander und seitlich hintereinander angeordneten Lagereinheiten 4 ausgefüllt ist. Am oberen Umlenkbereich 16 werden die Lagereinheiten 4 durch die seitliche Auslenkung gegenüber der Transportkette 8 zusätzlich nach oben angehoben, an unteren Umlenkbereichen 17, 18 werden die Lagereinheiten 4 dagegen nach unten gegenüber der Transportkette 8 verschoben. Die Umlenkräder 9, 10 sind als Zahnräder ausgebildet, die in die Kettenglieder der Transportkette 8 eingreifen.

Fig. 2 zeigt die rechte Seitenansicht des in Fig. 1 dargestellten Umlaufmagazins 1. Die linke, in Fig. 1 nicht sichtbare Seite ist gleichermaßen mit einem Führungsschlitz 13 und mit einer Transportkette und mit Umlenkrädern bestückt. Die Führungsschlitze 13 der linken Seite und 14 der rechen Seite sind in Führungsplatten 11 (Fig. 1) und 12 ausgebildet.

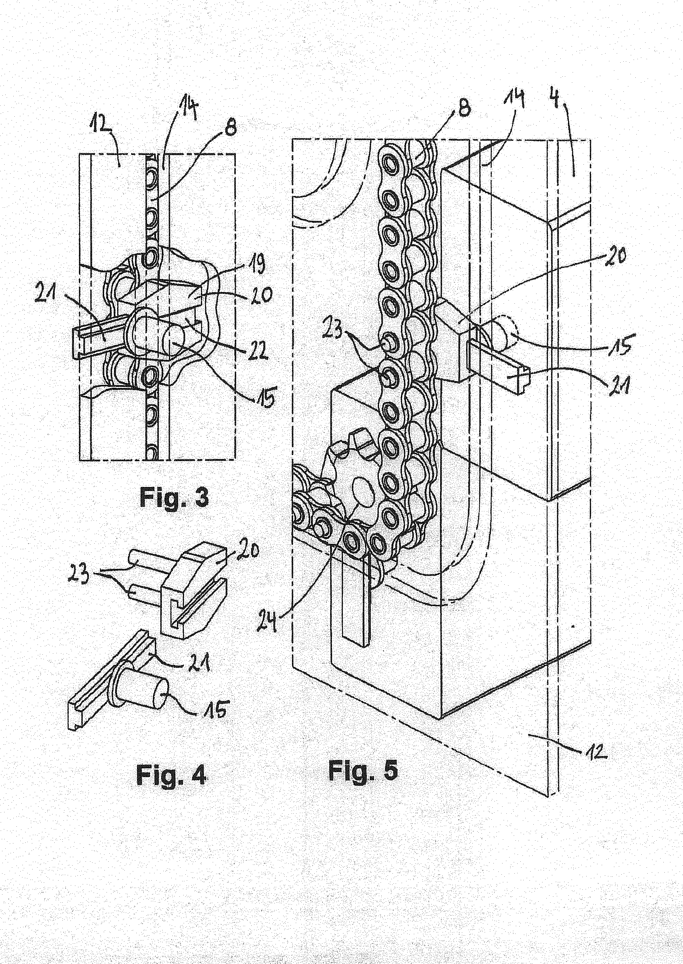

Die Detailansicht von Fig. 3 zeigt eine an der Transportkette 8 angebrachte Verstelleinrichtung 19, die aus einem Lagerblock 20 und einer Verstellschiene 21 besteht, die in einer Nut 22 am Lagerblock 20 quer zur Transportrichtung der Transportkette 8 verschiebbar ist. An der Verstellschiene 21 ist ein als bolzenförmiges Lagerelement ausgebildetes Halteelement 15 angebracht, das durch den Führungsschlitz 14 in der Führungsplatte 12 hindurchgreift. An dem Halteelement 15 ist eine Lagereinheit 4 schwenkbeweglich befestigt, wie dies in Fig. 5 dargestellt ist.

Die Einzelteile der Verstelleinrichtung 19 von Figur 3 sind in Fig. 4 nochmals separat dargestellt. Hier ist ersichtlich, dass rückseitig am Lagerblock 20 zwei Befestigungszapfen 23 abstehen, die, wie in Fig. 5 ersichtlich, durch Kettenglieder der Transportkette 8 hindurchgreifen.

In Fig. 5 ist außer den bereits erwähnten Elementen ein unteres Umlenkrad 24 ersichtlich, welches als Zahnrad ausgebildet ist und in die Kette 8 mit seinem Zahnkranz eingreift.

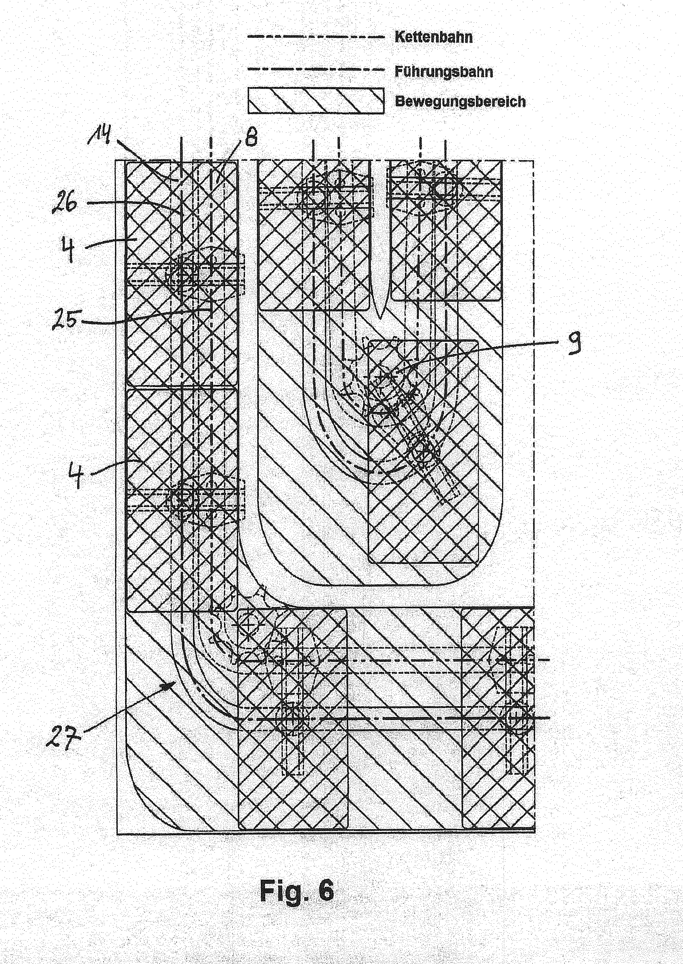

Anhand der Teilansicht von Fig. 6 ist ersichtlich, wie die seitliche Verschiebung der Lagereinheiten gegenüber der Transportkette 8 an unterschiedlichen Positionen des Umlaufmagazins erfolgt. Der Verlauf der Transportkette 8 wird als Kettenbahn 25 mittels einer stichpunktierten Linie dargestellt, die jeweils zwei Punkte zwischen längeren Strichen aufweist. Der Verlauf des Führungsschlitzes 14 ist hier als strichpunktierte Führungsbahn 26 dargestellt. Die seitliche Abweichung des Halteelements 15 wird durch den seitlichen Abstand der Führungsbahn 26 von der Kettenbahn 25 bestimmt bzw. vom seitlichen Abstand des Führungsschlitzes 14 von der Transportkette 8. Da die Lagereinheiten 4 an den Halteelementen 15 befestigt sind, wird deren seitliche Auslenkung gegenüber der Transportkette 8 vom Verlauf des Führungsschlitzes 14 in Bezug auf den Verlauf der Transportkette 8 bestimmt. Durch die seitliche Verschiebbarkeit wird erreicht, dass die in der Zeichnung auf gleicher Höhe nebeneinander angeordneten Lagereinheiten nur einen sehr geringen Abstand zueinander benötigen. Außerdem ist es möglich, die an der Transportkette 8 direkt hintereinander angeordneten Lagereinheiten 4 praktisch abstandslos anzuordnen, wie die beiden links dargestellten, übereinander angeordneten Lagereinheiten 4.

Im unteren Bereich zeigt die Darstellung, dass in dem dort dargestellten Umlenkungsbereich 27 sich der seitliche Abstand zwischen Transportkette 8 und Führungsschlitz 14 stark verändert. Dadurch wird der schraffierte Bewegungsbereich weit nach unten gelegt, so dass ein ausreichender Abstand zu anderen Bewegungsbereichen, beispielsweise im Bereich des Umlenkrades 9, eingehalten wird. Der schraffiert dargestellte Bewegungsbereich kennzeichnet den Raum, den die Lagereinheiten 4 bei ihrer Transportbewegung durch das Umlaufmagazin 1 benötigen.

Das dargestellte Ausführungsbeispiel stellt eine Möglichkeit dar, wie die Lagereinheiten 4 zur besseren Raumausnutzung gegenüber dem Transportstrang, der hier als Transportkette 8 dargestellt ist, verschoben werden können. Eine Verschiebbarkeit im Bezug auf den Transportstrang kann aber z. B. auch mittels Kipphebeln oder in anderer Weise realisiert werden. Als Antrieb für den Transportstrang können computergesteuerte Schrittmotoren oder andere Antriebssysteme vorgesehen sein.

Zusätzlich zu der Führungsbahn 26, in der die Halteelemente 15 sich bewegen, können eine oder weitere Führungsbahnen ggf. mit umschaltbaren Weichen so angeordnet sein, dass durch sie die Neigung der Lagereinheiten zur Senkrechten gesteuert werden kann.

Dabei würden zusätzliche Steuerelemente (Zapfen o.ä.), die mit den Lagereinheiten verbunden sind, in diese zusätzlichen Führungsbahnen eingreifen und dadurch die jeweilige Neigung der Lagereinheiten bestimmen.

Beispielsweise kann damit erreicht werden, dass die Lagereinheiten immer senkrecht bleiben, auch wenn die eingelagerten Gegenstände ein Ungleichgewicht verursachen.

Oder es könnte ein gewünschtes Kippen zum Befüllen / Entleeren oder Ausleeren der Lagereinheiten an bestimmten Stellen des Umlaufes erreicht werden.

Es kann weiter vorgesehen sein, dass die Führungsbahn(en) partiell entfernbar oder aufklappbar sind, um die Verstelleinrichtungen 19 zu wechseln oder im Abstand anders anzuordnen.

## Patentansprüche

1. Lagersystem mit einem Umlaufmagazin (1), bei dem mehrere Lagereinheiten (4) in Reihe an wenigstens einer Transportkette (8) oder einem anderen flexiblen Transportstrang, vorzugsweise jeweils schwenkbar um eine horizontale Achse, gelagert sind, wobei die Lagereinheiten (4) jeweils mittels einer Verstelleinrichtung (19) am Transportstrang seitenverschiebbar angebracht sind und eine Führungseinrichtung die seitliche Verschiebung der Lagereinheiten (4) gegenüber dem Transportstrang bestimmt, **dadurch gekennzeichnet, dass** die als quaderförmige Lagerboxen ausgebildeten Lagereinheiten (4) übereinander abstandslos an der Transportkette (8) angeordnet sind, dass die Lagereinheiten (4) an ihren gegenüberliegenden Stirnseiten (5, 6) schwenkbeweglich an jeweils einer Transportkette (7, 8) befestigt sind, und dass an einer Frontseite (3) und/oder Rückseite des Lagersystems jeweils mehrere dicht übereinander angeordnete Lagereinheiten (4) zugänglich sind.

2. Lagersystem nach Anspruch 1, **dadurch gekennzeichnet, dass** die Verstelleinrichtung (19) ein am Transportstrang angebrachter Lagerblock (20) mit einer quer zur Ausrichtung des Transportstrangs verschiebbar gelagerter Verstellschiene (21) ist, und dass an der Verstellschiene (21) ein eine Lagereinheit (4) tragendes Halteelement (15) angebracht ist.

3. Lagersystem nach einem der Ansprüche 1 oder 2, **dadurch gekennzeichnet, dass** die Führungseinrichtung einen Führungsschlitz (14) oder eine Führungsnut oder eine Führungsschiene hat.

4. Lagersystem nach Anspruch 3, **dadurch gekennzeichnet, dass** die Lagereinheiten (4) mit Führungselementen an der Führungseinrichtung angreifen.

5. Lagersystem nach einem der vorhergehenden Ansprüche, **dadurch gekennzeichnet, dass** die Lagereinheiten (4) um eine Längsachse schwenkbar an dem Führungsstrang gelagert sind.

6. Lagersystem nach einem der vorhergehenden Ansprüche, **dadurch gekennzeichnet, dass** die Lagereinheiten (4) als Lagerboxen, Regalböden oder als Stellplätze oder Plattformen zur Aufnahme eines Kraftfahrzeugs ausgebildet sind.

7. Lagersystem nach einem der vorhergehenden Ansprüche, **dadurch gekennzeichnet, dass** die Lagereinheiten (4) jeweils an wenigstens einer Stirnseite an dem Transportstrang befestigt sind.

8. Lagersystem nach einem der vorhergehenden Ansprüche, **dadurch gekennzeichnet, dass** eine Führungsbahn (26) in unterschiedlichen Abständen zu einer Kettenbahn (25) verläuft, wobei die Führungsbahn (26) durch einen Führungsschlitz oder eine sonstige Führungseinrichtung vorgegeben ist und die Kettenbahn (25) dem Verlauf einer Transportkette (8) oder einem anderen flexiblen Transportstrang folgt, die in einer oder mehreren hintereinander verlaufenden Schleifen um Umlenkräder (9, 10, 24) als Endlosstrang verläuft.

9. Lagersystem nach einem der vorhergehenden Ansprüche, **dadurch gekennzeichnet, dass** das Umlaufmagazin (1) an einer Frontseite (3) und/oder an einer Rückseite einen freien Zugang zu den Lagereinheiten (4) hat, und dass hinter den zugänglichen Lagereinheiten (4) im Umlaufmagazin (1) in mehreren senkrecht verlaufenden Lagerebenen mehrere im Wesentlichen vertikal verlaufende Reihen von Lagereinheiten (4) sich in einem unzugänglichen Bereich befinden, und dass die im unzugänglichen Bereich befindlichen Lagereinheiten (4) durch eine Längsbewegung des Transportstrangs in den zugänglichen Bereich transportierbar sind.

10. Lagersystem nach Anspruch 1, **dadurch gekennzeichnet, dass** als Verstelleinrichtung (19) jeweils ein Schwenk- oder Kipphebel vorgesehen ist.
